# EUROPEAN PATENT SPECIFICATION

(11) **EP 0 669 798 B1**
(45) Date of publication and mention of the grant of the patent: **07.01.1999**
(21) Application number: 93921945.7
(22) Date of filing: 08.10.1993
(51) Int. Cl.: A01G 31/00

(54) **PLANT POT**
PFLANZENTOPF
POT POUR DES PLANTES

(30) Priority: 09.10.1992 FI 924596
(43) Date of publication of application: 06.09.1995
(73) Proprietor: Rockwool International A/S, 2640 Hedehusene (DK)
(72) Inventor: TUOMISALO, Väinö, Aukusti, FIN-02180 Esbo (FI)
(74) Representative: Prins, Hendrik Willem
(86) International application number: FI9300408
(87) International publication number: WO9408448

(56) References cited:
- EP-A- 0 416 838
- US-A- 5 060 419

## Description

The present invention is directed to a plant pot for use in substrate culture comprising a body of an inorganic material, such as mineral wool, having substantially planar, mutually substantially parallel upper and bottom surfaces as well as side walls extending between the peripheries of the said two surfaces, the upper surface comprising an opening for receiving a seed or a plant, and the bottom surface comprising at least one recess, the said recess or recesses being enclosed by the periphery of the said bottom surface.

It is since long known to use synthetic substrates, e.g. mineral wool, for the cultivation of plants. The procedure of cultivation is usually a three-stage process, according to which a seed is first sown into a small body of mineral wool. When a plant has emerged, the small body is inserted in a suitable opening in a bigger mineral wool body, usually in the form of a cube. The cube walls are covered with plastic so as to prevent roots from one cube from penetrating into another cube when the cubes are placed next to each other. In the last stage when the plants have grown some more, the cubes with plants are transferred onto a substrate mineral wool mat at a distance from each other, whereby the roots from the cubes are allowed to grow into the mat. Nutrition is provided to the plants with the irrigation water, usually using the ebb and flow method.

A large number of different plant pots for use e.g. in the second cultivation stage, is known.

Thus e.g. EP 416 838 discloses a propagation block with an air space in the bottom surface for the purpose of facilitating air pruning of the roots. The air space, the height of which is not defined in detail, is completely surrounded by the periphery of the bottom surface, in contrast to the design disclosed in the EP 176 134, which comprises an arrangement according to which the bottom surface of the parallelepiped is provided with at least one groove which opens in at least one side surface. A disadvantage with the first mentioned pot is that the air circulation is far from optimized. A disadvantage with the last mentioned pot is that, although air can penetrate from the sides into the grooves, the arrangement can lead to an excess of moisture escaping from the block while allowing access to the roots of e.g. various pests.

According to the EP 479 391 a plant pot is provided, also preferably in the form of a parallelepiped, with through channels extending from the bottom to the top surface to provide a rising air stream during ebb and heating. According to an embodiment thereof, the bottom surface can be provided with cavities of a limited height, in order to reduce the contact surface of the pot with the floor onto which the pot is to be placed, the through channels opening into the cavities. No restrictions as to the positioning of the cavities on the bottom surface, nor to their size and shape are indicated in the said disclosure. Furthermore, according to another embodiment, the pot is provided with narrow slits connecting the through channels with the opening for the seedling. The said embodiment is rather complicated to its structure, the many cavities and slits leading to a product which is difficult to manufacture and to handle without damage to the product.

The present invention aims at overcoming the drawbacks with the afore mentioned known plant pots, and especially at providing a plant pot with satisfactory air circulation and without excess loss of moisture, and which also is easy to manufacture.

This is achieved with a plant pot of the afore mentioned kind according to which at least one of the said recesses in the bottom surface is in the form of a groove which is arched toward the upper surface of the pot.

Thus the groove has a cross-section in a plane perpendicular to the bottom surface, e.g. in the transverse or longitudinal direction of the groove, which has substantially the shape of a circle segment or of an arc of a circle. According to one embodiment all the said recesses in the bottom surface may be in the form of arched grooves.

The plant pot is preferably of parallelepiped shape, preferably a cube, but can also be in the form of e.g. a cylinder or a frustum of a cone. The parallelepiped shape is preferred i.a. for production technical reasons.

The grooves may be arranged in the bottom surface in any suitable manner, such as, in the case of a parallelepiped shaped body, in a direction parallel to and close to a side wall, or alternatively at an angle to the side wall, e.g. along a diameter thereof. Four grooves, joined at their end, may form a square, parallel to the sides or at e.g. 45° angle thereto.

According to a further embodiment, the bottom surface can be provided with a number of parallel grooves extending across the bottom surface both along the width and the length thereof, the intersecting grooves thus forming a criss-cross pattern in the bottom surface. Also the bottom may be provided with two diagonally arranged grooves forming a cross, or a circular endless groove for example in connection with a round pot. In this case the cross-section of the groove in a plane perpendicular to the bottom surface along a diameter thereof has the shape of a circle arc.

According to one embodiment the groove preferably has a length substantially longer than the width, but it is according to the invention also conceivable that the width of the groove can substantially correspond to the length of the groove. The groove is, in the longitudinal, or alternatuively in the transverse direction thereof, arched in a direction toward the upper surface, thus having vertical flat side or end walls respectively. Such arched grooves can easily be milled in the plant pot with a milling machine with circular milling blades.

According the invention a plant pot is obtained from which there is no excess escape of moisture due to the fact that the groove is encircled by the periphery of the bottom surface, the encircling rim, however, at places being thin enough to allow for a proper circulation of air. In addition there will, due the arch shape, be a sufficient supply of air in the pot.

The groove or the recess extends into the body of the pot preferably only over a minor part of the height of the pot, usually not higher than the plane defining the bottom of the opening for the plant. According to one embodiment of the invention, however, one or more, such as two grooves can be arranged to intersect, at the highest part thereof, the bottom surface or the edge of the bottom surface of the opening for the plant, in order to provide for a through hole extending from the bottom surface to the upper surface. Such a through hole will remain in the pot also after inserting the plant with the small mineral body from the first stage of cultivation, if care is taken that the horizontal cross-sections of the small mineral body and opening, respectively, are suitably designed so that the mineral body does not fill up the whole opening.

According to a further embodiment the pot can be provided with one or several separate through channels extending from the upper surface and opening into the groove. The through channels are preferably substantially vertical as such channels can easily be made without the risk of negatively affecting the stability and the coherence of the product.

According to a preferred embodiment, when the plant pot is in the form of a parallelepiped, the bottom surface is provided with two mutually parallel arched grooves which are also parallel to and at equal distances from a respective side wall, and which extend over a major part, preferably over at least 75% and in some embodiments over at least 90% of the distance between the other two parallel side walls. Each groove can be connected to one through channel symmetrically arranged around the opening for the seedling, so as to provide openings in the upper surface which are also symmetrically and preferably substantially diametrically disposed with relation to the opening for the seedling. According to an alternative embodiment, each groove is connected to several, but preferably to two, through channels, preferably diametrically and symmetrically disposed around the opening in the upper surface as described above.

According to a further embodiment, there is provided a groove as defined above, extending over the major part, such as over at least 75%, and even over at least 90% of a diameter of the bottom surface of a parallelepiped shaped or cylindrical plant pot. The said groove can be connected to at least one, but for symmetry reasons preferably to two vertical through channels, resulting in a product with the openings of the through channels symmetrically disposed around the opening for the seedling. According to an alternative embodiment, there are two intersecting grooves, which each can be connected to one or preferably two through channels as discussed above.

A further embodiment comprises a plant pot having a single groove in the bottom surface the width of which is substantially equal to its length and which thus extends in the direction of the bottom surface over a major part of more than one dimension of the bottom surface. When the pot is in the form of a parallelepiped, the groove preferably extends over and covers a major part of the bottom surface between the two pairs of opposite parallel sides, leaving a rather narrow rim at the border of the surface area. This embodiment has the advantage of reducing substantially the contact area with the floor or the mat on which the body is to be placed, and thus providing a satisfactory air circulation in the body, without excess escape of moisture. According to a further embodiment a through channel can open into such a recess, but preferably two or four channels are arranged symmetrically in the body, as described above.

In order to further improve the air circulation the pot may be provided with horisontal tunnels, either through tunnels extending from one side wall to another, or a through channel may be provided with at least one through tunnel extending from the through channel preferably substantially horisontally to and opening into a side wall of the body. A suitable number of tunnels is 1 to 3 arranged at suitable distances from each other and from the bottom surface.

In order to further improve the air flow, one embodiment according to the invention is characterized in that at least one edge between a side wall and the bottom surface is bevelled in a manner so as to maintain the recess(es) enclosed by the periphery of the bottom surface. According to a further embodiment, when the body is a parallelepiped, at least one edge between adjacent side walls may be bevelled, to improve the supply of air when the pots are arranged close together.

The invention is further illustrated by the appended drawing, according to which
Figs. 1A and 1B show, in perspective, one embodiment according to the invention, and
Figs. 2A and 2B show, in perspective, a further embodiment according to the invention.

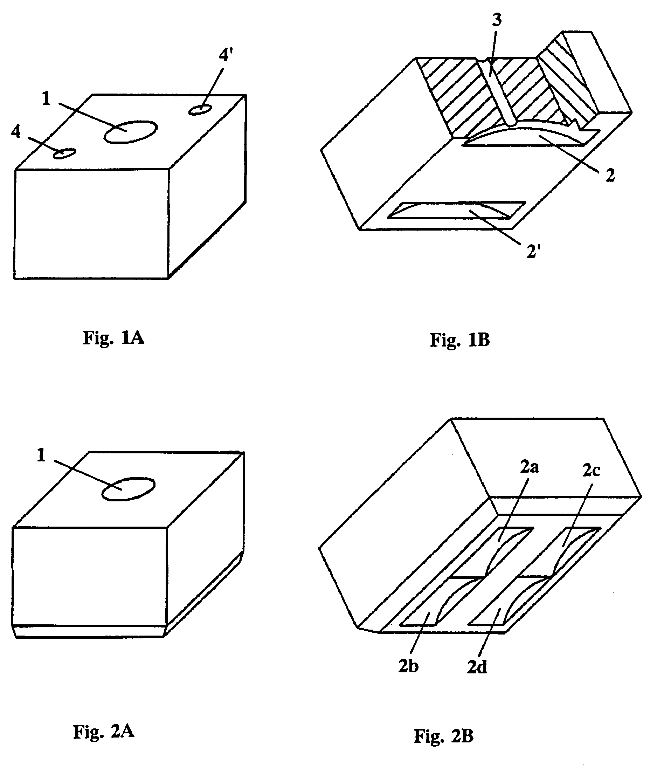

In the drawing, two embodiments of a plant pot in the shape of a cube are shown. As can be seen, the cube according to Fig. 1 is provided in the upper surface with a central opening 1 extending in the direction of the height of the cube and intended for a seed, seedling or a plant. The opposite bottom surface is provided with two mutually parallel arched grooves 2 and 2', which are arranged in a parallel fashion to and at equal distances from a respective side wall. Each groove is connected to a vertical through channel 3, respectively, which opens in the upper surface forming openings 4 and 4' therein. As can be seen the openings 4 and 4' are positioned in a substantially diametrical and symmetrical manner with respect to the central opening 1.

Fig. 2A and 2B show an alternative embodiment having four grooves 2a, 2b, 2c and 2d, arranged two (2a, 2b) and two (2c, 2d) in pairs in an aligned relationship, one groove forming an extension of the other. In this embodiment the edges between the side walls and the bottom surface are provided with bevels 5. This embodiment has the advantage that through channels may be provided which open into the grooves at the highest point of respective groove, which further improves air circulation.

## Claims

1. Plant pot for use in substrate culture comprising a body of an inorganic material, such as mineral wool, having substantially planar, mutually substantially parallel upper and bottom surfaces as well as side walls extending between the peripheries of the said two surfaces, the upper surface comprising an opening (1) for receiving a seed or a plant and the bottom surface comprising at least one recess (2, 2', 2a-2d), the said recess or recesses being enclosed by the periphery of the said bottom surface, **characterized** in that at least one of said recesses in the bottom surface is in the form of a groove which is arched toward the upper surface of the pot.

2. Plant pot according to claim 1, **characterized** in that the length of the groove is longer than the width thereof, the arc of the groove extending in the longitudinal direction of the groove.

3. Plant pot according to claim 1 or 2, **characterized** in that it has the form of a parallelepiped.

4. Plant pot according to any one of claims 1 to 3, **characterized** in that it is provided with at least one through channel (3) extending from the upper surface of the body and opening into the groove.

5. Plant pot according to claim 4, **characterized** in that the through channel(s) (3) is (are) substantially vertical.

6. Plant pot according to any one of claims 1 to 5, **characterized** in that there are two mutually parallel grooves (2, 2', 2a, 2b, 2c) which are parallel to and at equal distances from a respective side wall.

7. Plant pot according to claims 4 to 6, **characterized** in that each groove is connected to one through channel, the through channels being arranged substantially diametrically and symmetrically with respect to the opening in the upper surface.

8. Plant pot according to claims 5 or 6, **characterized** in that one groove is connected to several through channels.

9. Plant pot according to claim 8, **characterized** in that at least one groove extends over a major part of a diameter of the bottom surface, said one or each groove being connected to two through channels arranged substantially symmetrically with respect to the opening in the upper surface.

10. Plant pot according to one or more of the preceding claims, **characterized** in that at least one through channel is provided with at least one through tunnel extending from the channel to and opening into a side wall of the body.

11. Plant pot according to claim 10, **characterized** in that the tunnel extends substantially horizontally.

12. Plant pot according to one or more of the preceding claims, **characterized** in that at least one edge between a side wall and the bottom surface is bevelled.

13. Plant pot according to one or more of the preceding claims 3 - 11, **characterized** in that at least one edge between adjacent side walls is bevelled.

## Patentansprüche

1. Pflanzentopf zur Benutzung in einem Kultursubstrat, bestehend aus einem Körper aus anorganischem Material, beispielsweise Mineralwolle, der im wesentlichen ebene, im wesentlichen parallel zueinander verlaufende obere und untere Oberflächen sowie Seitenwände besitzt, die sich zwischen den Rändern der beiden Oberflächen erstrecken, wobei die obere Oberfläche eine Öffnung (1) aufweist, um Saatgut oder eine Pflanze aufzunehmen und wobei die untere Oberfläche wenigstens eine Ausnehmung (2, 2', 2a - 2d) aufweist, die von den Umfangsrändern der unteren Oberfläche umschlossen ist, dadurch gekennzeichnet, daß wenigstens eine der Ausnehmungen in der unteren Oberfläche die Form einer Nut besitzt, die nach der oberen Oberfläche des Topfes hin gewölbt ausgebildet ist.

2. Pflanzentopf nach Anspruch 1,
dadurch gekennzeichnet, daß die Länge der Nut größer ist als ihre Breite, und daß die Wölbung der Nut sich in Längsrichtung dieser Nut erstreckt.

3. Pflanzentopf nach den Ansprüchen 1 oder 2,
dadurch gekennzeichnet, daß der Topf die Gestalt eines Parallelepipedes besitzt.

4. Pflanzentopf nach einem der Ansprüche 1 bis 3,
dadurch gekennzeichnet, daß er mit wenigstens einem durchgehenden Kanal (3) versehen ist, der von der oberen Oberfläche des Körpers in die Nut hinein verläuft.

5. Pflanzentopf nach Anspruch 4,
dadurch gekennzeichnet, daß der Durchgangskanal bzw. die Durchgangskanäle (3) im wesentlichen vertikal verlaufen.

6. Pflanzentopf nach einem der Ansprüche 1 bis 5,
dadurch gekennzeichnet, daß zwei parallel zueinander verlaufende Nuten (2, 2', 2a, 2b, 2c) vorgesehen sind, die parallel und im gleichen Abstand zu einer jeweiligen Seitenwand verlaufen.

7. Pflanzentopf nach den Ansprüchen 4 bis 6,
dadurch gekennzeichnet, daß jede Nut mit einem durchgehenden Kanal verbunden ist, und daß die durchgehenden Kanäle im wesentlichen diametral und symmetrisch zu der Öffnung in der oberen Oberfläche verlaufen.

8. Pflanzentopf nach den Ansprüchen 5 oder 6,
dadurch gekennzeichnet, daß eine Nut mit mehreren durchgehenden Kanälen verbunden ist.

9. Pflanzentopf nach Anspruch 8,
dadurch gekennzeichnet, daß sich wenigstens eine Nut über einen Hauptteil eines Durchmessers der unteren Oberfläche erstreckt, und daß eine oder jede Nut mit zwei Durchgangskanälen verbunden ist, die im wesentlichen symmetrisch gegenüber der Öffnung in der oberen Oberfläche verlaufen.

10. Pflanzentopf nach einem oder mehreren der vorhergehenden Ansprüche,
dadurch gekennzeichnet, daß wenigstens ein durchgehender Kanal mit wenigstens einem Durchgangstunnel verbunden ist, der von dem Kanal verläuft und sich nach einer Seitenwand des Körpers hin öffnet.

11. Pflanzentopf nach Anspruch 10,
dadurch gekennzeichnet, daß sich der Tunnel im wesentlichen horizontal erstreckt.

12. Pflanzentopf nach einem oder mehreren der vorhergehenden Ansprüche,
dadurch gekennzeichnet, daß wenigstens ein Rand zwischen einer Seitenwand und der unteren Oberfläche abgeschrägt ist.

13. Pflanzentopf nach einem oder mehreren der vorhergehenden Ansprüche 3 bis 11,
dadurch gekennzeichnet, daß wenigstens ein Rand zwischen benachbarten Seitenwänden abgeschrägt ist.

## Revendications

1. Pot pour plante destiné à être utilisé dans la culture en substrat, comprenant un corps en un matériau inorganique, telle que de la laine minérale, ayant des surfaces supérieure et inférieure sensiblement et mutuellement parallèles et sensiblement planes ainsi que des parois latérales s'étendant entre les périphéries desdites deux surfaces, la surface supérieure comprenant une ouverture (1) pour recevoir une graine ou une plante, et la surface inférieure comprenant au moins une cavité (2,2',2a-2d), la ou lesdites cavité(s) étant entourée(s) par la périphérie de ladite surface inférieure, caractérisé en ce qu'au moins une desdites cavités dans la surface inférieure est réalisée sous la forme d'une gorge qui est arquée vers la surface supérieure du pot.

2. Pot selon la revendication 1, caractérisé en ce que la longueur de la gorge est plus grande que sa largeur, l'arc de la gorge s'étendant dans la direction longitudinale de la gorge.

3. Pot selon la revendication 1 ou 2, caractérisé en ce qu'il a la forme d'un parallélépipède.

4. Pot selon l'une quelconque des revendications 1 à 3, caractérisé en ce qu'il est muni d'au moins un canal traversant (3) s'étendant depuis la surface supérieure du corps et débouchant dans la gorge.

5. Pot selon la revendication 4, caractérisé en ce que le ou les canal(aux) (3) est (sont) sensiblement vertical(aux).

6. Pot selon l'une quelconque des revendications 1 à 5, caractérisé en ce qu'il est prévu deux gorges mutuellement parallèles (2,2',2a,2b,2c) qui sont parallèles à une paroi latérale respective et situées à égale distance de celle-ci.

7. Pot selon les revendications 4 à 6, caractérisé en ce que chaque gorge est reliée à un canal traversant, les canaux traversants étant agencés sensiblement diamétralement et symétriquement par rapport à l'ouverture dans la surface supérieure.

8. Pot selon la revendication 5 ou 6, caractérisé en ce qu'une gorge est reliée à plusieurs canaux traversants.

9. Pot selon la revendication 8, caractérisé en ce qu'au moins une gorge s'étend sur une partie principale d'un diamètre de la surface inférieure, ladite ou chaque gorge étant reliée à deux canaux traversants agencés sensiblement symétriquement par rapport à l'ouverture dans la surface supérieure.

10. Pot selon l'une ou plusieurs des revendications précédentes, caractérisé en ce qu'au moins un canal traversant est prévu avec au moins un tunnel traversant s'étendant depuis le canal vers une paroi latérale du corps en débouchant dans celle-ci.

11. Pot selon la revendication 10, caractérisé en ce que le tunnel s'étend sensiblement horizontalement.

12. Pot selon l'une ou plusieurs des revendications précédentes, caractérisé en ce qu'au moins un bord situé entre la paroi latérale et la surface inférieure est chanfreiné.

13. Pot selon l'une ou plusieurs des revendications 3 à 11, caractérisé en ce qu'au moins un bord situé entre des parois latérales adjacentes est chanfreiné.
